# EUROPÄISCHE PATENTSCHRIFT

(11) **EP 0 811 438 B1**
(45) Veröffentlichungstag und Bekanntmachung des Hinweises auf die Patenterteilung: **16.08.2000**
(21) Anmeldenummer: 97108833.1
(22) Anmeldetag: 03.06.1997
(51) Int. Cl.: B21D 28/26

(54) **Trenn- und Ausklinkvorrichtung für perforierte Bleche**
Cutting and notching device for perforated metal sheets
Dispositif de coupe et d'encochage pour des tôles perforées

(30) Priorität: 07.06.1996 DE 19622844
(43) Veröffentlichungstag der Anmeldung: 10.12.1997
(73) Patentinhaber: Schuler Pressen GmbH & Co. KG, 73033 Göppingen (DE)
(72) Erfinder: Czapka, Robert, 73054 Eislingen (DE); Kienle, Hans-Peter, 73027 Stuttgart (DE); Bareis, Alfred, 73066 Uhingen (DE)

(56) Entgegenhaltungen:
- DE-U- 9 419 403
- FR-A- 2 540 422
- A. BAREIS: "Anlagen und Steuerungssysteme zum Perforieren von Blechen" WERKSTATTSTECHNIK, Bd. 79, 1989, Seiten 587-590, XP002052166

## Beschreibung

Die Erfindung betrifft eine Trenn- und Ausklinkvorrichtung für perforierte Bleche mit den Merkmalen nach dem Oberbegriff von Anspruch 1.

Perforierte Bleche werden in großem Umfang in zahlreichen Industriezweigen verwendet, nämlich als Siebe und Filter in der Nahrungsmittelindustrie, im Bergbau und in Kiesgruben, als Schutzabdeckungen bei Phonogeräten, Bau- und Werkzeugmaschinen, als Trennwände und Dekorationen, als Bauelemente in Haushaltgeräten, bei Büromöbeln, in Flugzeugen und im Industriebau.

Zum Perforieren von Blechen aus Stählen, NE-Metallen, oder Werkstoffkombinationen in Blechdicken zwischen-0,3 und 30 mm werden grundsätzlich zwei Arten von Pressen eingesetzt, und zwar Perforier-Breitpressen, um Bleche mit durchgehenden oder periodisch unterbrochenen Lochmustern aus Band- oder Tafelmaterial in Serie zu fertigen, und Streifenpressen, um Einzeltafeln, größere Blechformate und -Dicken mit individuellen Lochmustern herzustellen. (WT Werkstattstechnik, Band 79: 587 - 590, 1989 (nächstliegender Stand der Technik); und Band 80: 77 - 79, 1990, Springer-Verlag Berlin Heidelberg)

Während sich bei einer Streifenpresse die Blechtafeln mit einem Aufspanntisch in zwei senkrecht zueinander stehenden Koordinaten relativ zum Perforierwerkzeug bewegen lassen, fördern bei einer Perforier-Breitpresse Vorschubwalzen die Blechtafeln oder -bänder zwischen einem Oberwerkzeug, in der Regel einer Vielzahl von Stempeln, und einem Unterwerkzeug, einer Matrize, schrittweise synchron zum Arbeitstakt der Presse in einer Vorschubrichtung hindurch.

Die Stempel der Perforiervorrichtung sind in Reihen quer zur Vorschubrichtung angeordnet. Sie sind in einem Stempelhalter geführt. Ein Stößel der Presse schiebt sie durch eine Stempelführungsplatte hindurch und drückt sie durch das Blech in entsprechende Löcher der Matrize. Ein Abstreifer verhindert, daß das Blech beim Zurückziehen der Stempel an diesen hängen bleiben. Er ist starr oder wird phasenverschoben zum Stößel betätigt.

Vor oder hinter der Perforiervorrichtung kann eine Trenn- und Ausklinkvorrichtung angeordnet sein, die die Bleche in Längsrichtung in unterschiedlich breite Stücke trennt und mit Sonderlochungen oder Ausklinkungen versieht. Mit den bekannten Trenn- und Ausklinkvorrichtung lassen sich die einmal eingestellten Formate nicht während des Betriebs der Perforier-Breitpresse ändern.

Es ist eine Stanzmaschine und Ausklinkmaschine bekannt (DE C1 33 12 233) bei der ein Untermesser an verschiedene Obermesser in der Größe angepaßt werden kann. Ein Einsatz bei einer Perforier-Breitpresse ist hier nicht beschrieben.

Der Erfindung liegt die Aufgabe zugrunde, beliebige Ausschnitte am Rand des Blechs oder auch Löcher und Bohrungen im Blech selbst vornehmen zu können. Darüber hinaus sollen auch Trennschnitte in Vorschubrichtung möglich sein.

Sie wird gemäß der Erfindung durch die Merkmale des Anspruchs 1 gelöst.

Bei der Trenn- und Ausklinkvorrichtung sind ein oder mehrere Spaltstempel einer Stempelsteuereinheit zugeordnet. Eine oder mehrere Stempelsteuereinheiten sind über die Blechbreite längsverschieblich und feststellbar in einem Schnittgestelloberteil gehalten, das mindestens die gesamte Blechbreite überdeckt. Somit können an jeder Stelle, an der eine Stempelsteuereinheit montiert ist, Trennschnitte in Vorschubrichtung des Blechs, Ausklinkungen oder Sonderlochungen erzeugt werden, wenn die Stempelsteuereinheiten angesteuert werden. Gegebenenfalls ist auch kein separates Schnittgestell notwendig. Die Spaltstempel könnten gegebenenfalls auch direkt oder über andere Zwischenteile als Einheit mit dem Spaltstößel verbunden sein.

Die Stempelsteuereinheiten können über der Blechbreite unterschiedlich verteilt und individuell unterschiedlich angesteuert werden, z. B. elektronisch durch einen Mikroprozessor in Abhängigkeit von einem vorgegebenen oder adaptiven Programm oder nach Fuzzylogic oder mit neuronalen Netzen. Dabei kann es zweckmäßig sein, die Stempelsteuereinheiten in Abhängigkeit von der Position von Steuerschiebern der Perforiervorrichtung anzusteuern, um die Ausklinkungen und Sonderlöcher den gewählten Lochmustern anzupassen.

Werden die Stempelsteuereinheiten angesteuert, werden gleichzeitig die Spaltstempel aktiviert, und zwar zum einen indem die Stempelsteuereinheiten, in denen die Spaltstempel gehalten sind, vertikal um einen bestimmten Betrag zugestellt werden, so daß die Spaltstempel mit dem Werkzeugunterteil zusammenwirken, oder zum anderen indem die wirksame Länge der Spaltstempel durch zwei übereinanderliegende Steuerleisten verlängert wird, die im Kraftfluß zwischen den Spalt-stempeln und den Stempelsteuereinheiten liegen.

Weitere Einzelheiten der Erfindung sind im Zusammenhang mit der Zeichnung beschrieben. In der Zeichnung ist ein Ausführungsbeispiel der Erfindung dargestellt.

Es zeigt:

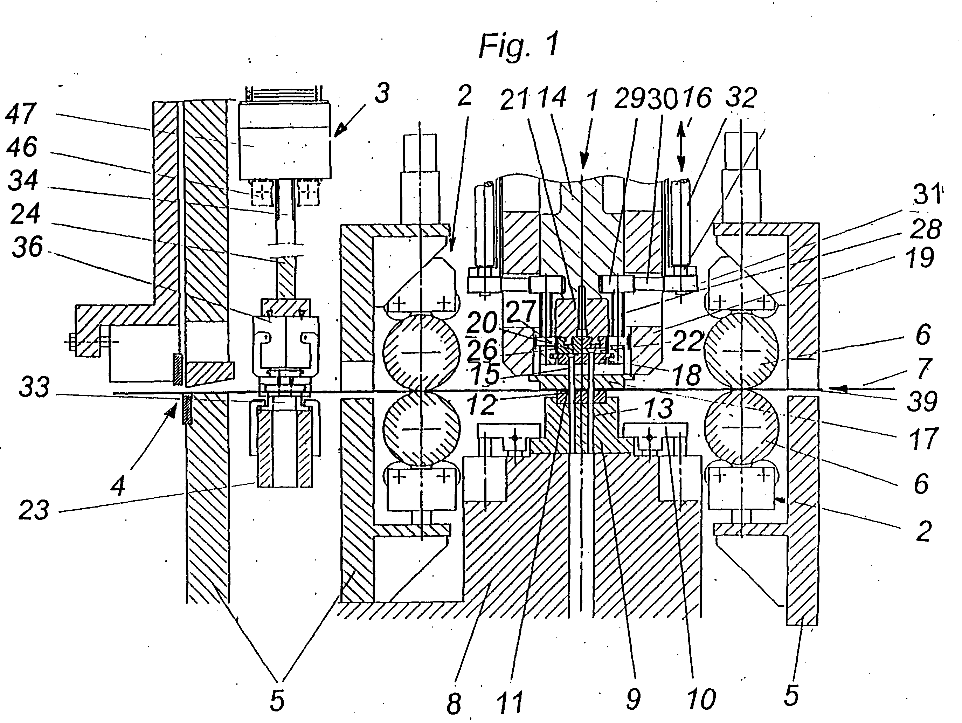

- Fig. 1: einen Teilquerschnitt durch eine Perforier-Breitpresse,

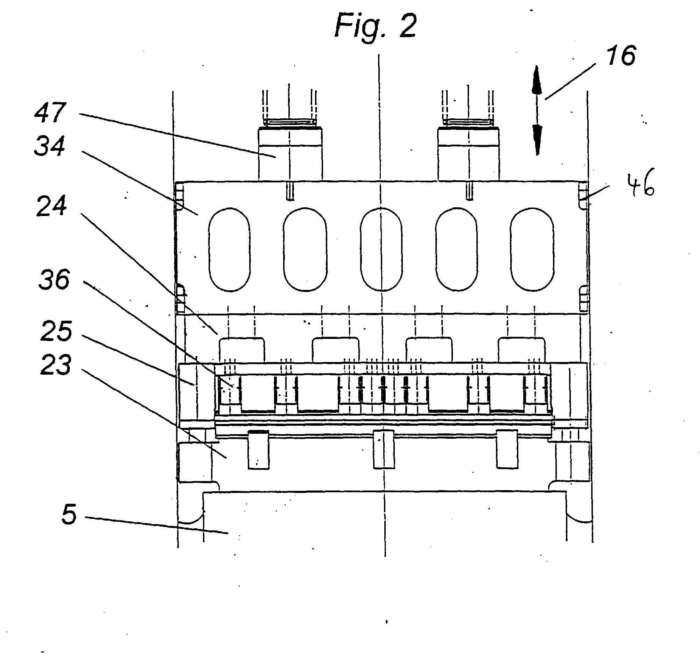

- Fig. 2: eine Ansicht einer Trenn- und Ausklinkvorrichtung,
- Fig. 3: einen schematischen Längsschnitt durch zwei Stempelsteuereinheiten mit jeweils zwei Steuerleisten, wobei der rechte Teil der Figur die inaktive Position der Stempelsteuereinheit und die linke Seite die aktive Position zeigt.

Eine Perforier-Breitpresse enthält in der Regel folgende wesentliche Baugruppen, nämlich eine Perforiervorrichtung 1, eine Vorschubvorrichtung 2, eine Trenn- und Ausklinkvorrichtung 3, eine Trennschere 4 und entsprechende, nicht näher dargestellte Antriebsvorrichtungen. Die Baugruppen sind in einem Pressenkörper 5 montiert.

Die Vorschubvorrichtung 2 umfaßt zwei Vorschubwalzenpaare 6, die jeweils vor und hinter der Perforiervorrichtung 1 im Pressenkörper 5 gelagert sind und zwischen denen ein Blech 39 schrittweise im Takt des Pressenhubs durch die Perforier-Breitpresse gefördert wird. Die Vorschubrichtung 7 und die Hubrichtung 16 sind mit Pfeilen gekennzeichnet.

Zur Perforiervorrichtung 1 gehört ein Pressentisch 8, auf dem eine Matrize 9 mittels Spannvorrichtungen 10 befestigt ist. Eine Lochplatte 11 bildet den oberen Teil der Matrize 9, über den das Blech 39 geführt wird. Die Lochplatte 11 und die Matrize 9 haben Löcher 12 und Bohrungen 13, in die Stempel 15 während des Perforiervorgangs eingreifen, indem sie aus dem Blech 39 entsprechende Blechscheiben ausstanzen.

Die Stempel 15 werden in einer Stempelhalteplatte 18 längsverschieblich gehalten.

Die Stempelführungsplatte 17 führt die Stempel 15 in Längsrichtung und sorgt gleichzeitig dafür, daß das Blech 39 beim Aufwärtshub nicht hängen bleibt. Sie kann starr sein oder wie dargestellt durch einen separaten Abstreiferantrieb 19 phasenverschoben zur Stößelbewegung bewegt werden.

Die Stempelhalteplatte 18 ist an einem Stößel 14 befestigt. Dieser wird von einem nicht näher dargestellten Exzenterantrieb angetrieben und führt taktmäßig eine Hubbewegung aus. Oberhalb der Stempel 15 ist ein Freiraum 22 im Stößel 14 vorgesehen, in den die Stempel 15 zurückweichen können, sofern sie nicht von einer Steuereinrichtung aktiviert werden.

Im vorliegenden Fall besteht die Steuereinrichtung aus einem oder mehreren Steuerschiebern 20, die quer zur Vorschubrichtung 7 in den Freiraum 22 verschoben werden und den Zwischenraum zwischen zu aktivierenden Stempeln 15 und dem Stößel 14 ausfüllen. Damit wird der Kraftfluß zwischen dem Stößel 14 und den Stempeln 15 hergestellt, so daß diese durch das Blech 39 dringen können.

Der bzw. die Steuerschieber 20 sind in einer am Stößel 14 befestigten Schieberführung 21 geführt. Ein Schrittmotor treibt sie über eine Schiebehülse, eine Antriebsspindel, Ritzel 27, 29, 31, einen Zahnriemen 30 sowie über eine Hohlwelle 32, eine Welle 28 und eine Zahnstange 26 an.

Sind mehrere Steuerschieber 20 vorhanden, so können diese von einem Antrieb gemeinsam verstellt werden; zweckmäßigerweise werden sie jedoch von mehreren Antrieben unabhängig voneinander angetrieben.

Die Steuerschieber 20 können in Vorschubrichtung 7 versetzt zueinander angeordnet sein und sich um einen gewissen Betrag überlappen. Die Stempel 15 sind ebenfalls in versetzten Reihen angeordnet. So kann ein Steuerschieber 20 die Stempel 15 auf der einen Blechseite aktivieren, während der andere Steuerschieber 20 die Stempel 15 auf der anderen Blechseite aktiviert. Dabei kann die Anzahl der den jeweiligen Steuerschiebern 20 zugeordneten Stempel 15 gleich oder ungleich, symmetrisch oder asymmetrisch sein.

Einem Steuerschieber 20 können auch mehrere Reihen Stempel 15 zugeordnet sein. Indem man seine Stirnkante in Verstellrichtung entsprechend gestaltet, z. B. anschrägt, können ein oder mehrere Stempel 15 der einen Reihe vor den Stempeln 15 einer anderen Reihe aktiviert werden.

In dem gezeigten Ausführungsbeispiel ist die Trenn- und Ausklinkvorrichtung 3 am Auslauf der Perforiervorrichtung 1 angeordnet. Es ist jedoch auch möglich, sie vor der Perforiervorrichtung 1 am Einlauf vorzusehen. Sie besteht im wesentlichen aus einem Schnittgestellunterteil 23, auf dem ein Werkzeugunterteil 33 montiert ist, einem Schnittgestelloberteil 24, das an einem Spaltstößel 34 angebracht ist und T-förmige Führungsnuten 44 hat, in denen Stempelsteuereinheiten 36 gehalten sind. Diese werden durch hydraulische Spannvorrichtungen 45 in der gewünschten Position festgesetzt.

Der Spaltstößel 34 wird in einer Spaltstößelführung 46 geführt und über einen Druckpunkt 47 separat oder von einer nicht näher dargestellten Exzenterwelle der Perforiervorrichtung 1 über Kipphebel und Pleuelstangen zu einer Hubbewegung 16 angetrieben.

An der Stempelsteuereinheit 36 ist mittels eines Werkzeughalters 48 eine Halteplatte 38 befestigt, in der Spaltstempel 35 längsverschieblich gehalten sind. Die Halteplatte 38 begrenzt einen Ausweichraum 40 nach unten hin, während übereinanderliegende Steuerleisten 41, 42 den Ausweichraum 40 nach oben abschließen.

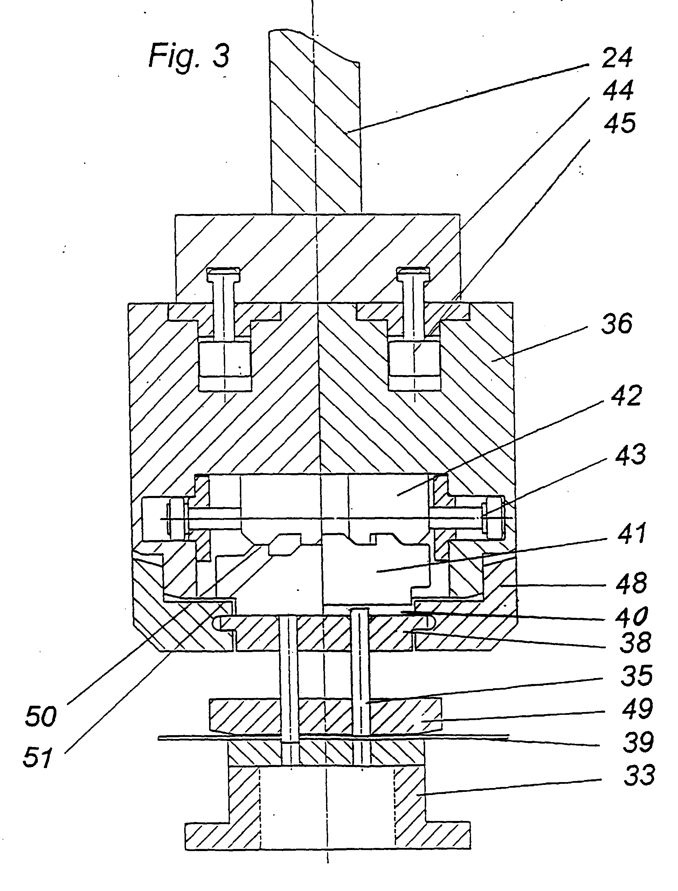

Die Steuerleisten 41, 42 stützen sich gegeneinander über Raststufen 50, 51 ab, die eine aktive und eine inaktive Rastposition erlauben, wenn man die Steuerleisten 41, 42 quer zur Hubrichtung 16 und relativ zueinander verstellt. In der Figur 3 zeigt die rechte Seite der Darstellung die inaktive Rastposition. Der Spaltstempel 35 kann in einen Ausweichraum 40 zurückweichen, der von der Steuerleiste 41 nach oben begrenzt wird, und bleibt somit beim Stanzvorgang inaktiv.

Die linke Seite der Figur 3 zeigt die aktive Rastposition. Die Steuerleiste 41 füllt den Ausweichraum 40 aus und stützt sich über die Steuerleiste 42 an dem Gehäuse der Stempelsteuereinheit 36 ab. Der Spaltstempel 35 kann somit nicht zurückweichen und ist für den Stanzvorgang aktiviert.

Die Steuerleiste 41 ist in Hubrichtung 16 beweglich geführt, während die Steuerleiste 42 quer dazu und relativ zur Steuerleiste 41 von einem doppeltwirkenden Hydraulikkolben verschoben werden kann. Die Steuerleisten 41, 42 werden durch nicht dargestellte Federn aneinander gedrückt und durch Hydraulikdruck gelüftet.

Anstelle der gezeigten Ausführung ist es auch möglich, die Spaltstempel 35 zusammen mit der Stempelsteuereinheit 36 vertikal um einen Betrag zuzustellen, um die Spaltstempel 35 wirksam werden zu lassen.

Während des Stanzvorgangs wird das Blech 39 von einer Platte 49, in der die Spaltstempel 35 geführt sind, gegen das Werkzeugunterteil 33 vertikal geführt.

## Patentansprüche

1. Trenn- und Ausklinkvorrichtung für perforierte Bleche (39), insbesondere in einer Perforier-Breitpresse, bei der
in einem Pressenkörper (5) eine Perforiervorrichtung (1) vorgesehen, ist und eine Vorschubvorrichtung (2) das Blech (39) schrittweise durch die Perforiervorrichtung (1) und durch die vor oder hinter dieser angeordneten Trenn- und Ausklinkvorrichtung (3) fördert,
wobei die Trenn- und Ausklinkvorrichtung (3) ein über die Blechbreite reichendes Schnittgestellunterteil (23) mit einem Werkzeugunterteil (33) und einem Spaltstößel (34) hat, der bei einer Hubbewegung einen Spaltstempel (35) betätigt, der mit dem Werkzeugunterteil (33) zusammenarbeitet, **dadurch gekennzeichnet**, daß mit dem Spaltstößel (34) ein Schnittgestelloberteil (24) verbunden ist, in dem ein oder mehrere Stempelsteuereinheiten (36) über die Blechbreite längsverschieblich und feststellbar geführt sind, die die Spaltstempel (35) halten und ansteuern und wobei ein den Spaltstempeln (35) zugeordneter Ausweichraum (40) nach oben durch zwei übereinanderliegende Steuerleisten (41, 42) begrenzt wird, die relativ zueinander in verschiedene Rastpositionen mit unterschiedlichen Raststufen (50, 51) verschoben werden können und den Kraftfluß zwischen dem Spaltstempel (35) und der Stempelsteuereinheit (36) herstellen.

2. Vorrichtung nach Anspruch 1, **dadurch gekennzeichnet**, daß die Stempelsteuereinheiten (36) in T-förmigen Führungsnuten (44) am Schnittgestelloberteil (24) geführt sind und mittels hydraulischer Spannvorrichtungen (45) mit diesem verspannt sind.

3. Vorrichtung nach Anspruch 1 oder 2, **dadurch gekennzeichnet**, daß der Spaltstempel (35) in einer Halteplatte (38) gehalten ist, die in der Stempelsteuereinheit (36) den Ausweichraum (40) nach unten begrenzt, dessen Erstreckung in Hubrichtung (16) einstellbar ist.

4. Vorrichtung nach Anspruch 1, **dadurch gekennzeichnet**, daß die dem Spaltstempel (35) zugewandte Steuerleiste (41) in Hubrichtung geführt ist, während die andere Steuerleiste (42) durch einen doppeltwirkenden Hydraulikkolben (43) dazu quer verstellbar ist.

5. Vorrichtung nach einem der vorangehenden Ansprüche, **dadurch gekennzeichnet**, daß mehrere Spaltstempel (35) zu einer Stempelsteuereinheit (36) gehören.

6. Vorrichtung nach einem der vorangehenden Ansprüche, **dadurch gekennzeichnet**, daß die untere Steuerleiste (41) durch Federkraft an der oberen (42) anliegt und durch Hydraulikdruck gelüftet wird, bevor die obere Steuerleiste (42) verstellt wird.

7. Vorrichtung nach einem der vorangehenden Ansprüche, **dadurch gekennzeichnet**, daß die Steuerleisten (41, 42) elektronisch unabhängig voneinander nach einem Programm angesteuert werden.

8. Vorrichtung nach einem der vorangehenden Ansprüche, **dadurch gekennzeichnet**, daß die Steuereinheiten (41, 42) in Abhängigkeit von der Position von Steuerschiebern (20) in der Perforiervorrichtung (1) angesteuert werden.

9. Vorrichtung nach einem der vorangehenden Ansprüche, **dadurch gekennzeichnet**, daß eine Exzenterwelle der Perforier-Breitpresse den Spaltstößel (34) über Kipphebel und Pleuels antreibt

10. Vorrichtung nach Anspruch 1 oder 2, **dadurch gekennzeichnet**, daß die Stempelsteuereinheiten (36) um bestimmte Beträge vertikal zugestellt werden können.

11. Vorrichtung nach einem der vorangehenden Ansprüche, **dadurch gekennzeichnet**, daß das Schnittgestelloberteil (24) gegenüber dem Schnittgestellunterteil (23) durch eine Schnittgestellführung (25) geführt ist.

## Claims

1. Separating and notching device for perforated metal sheets (39), in particular in a wide-gauge perforating press, in which a perforating device (1) is provided in a press body (5), and a feed device (2) conveys the metal sheet (39) in steps through the perforating device (1) and through the separating and notching device (3) arranged upstream or downstream of the latter, the separating and notching device (3) having a cutting-frame lower part (23) extending over the width of the metal sheet, with a die lower part (33) and with a splitting plunger (34) which, during a stroke movement, actuates a splitting ram (35) cooperating with the die lower part (33), characterized in that the splitting plunger (34) has connected to it a cutting-frame upper part (24), in which one or more ram control units (36) are guided over the width of the metal sheet so as to be longitudinally displaceable and lockable, the said ram control units holding and activating the splitting rams (35), and a lay-by space (40) assigned to the splitting rams (35) being delimited upwards by two control strips (41, 42) lying one above the other, which can be displaced relative to one another into different catching positions with different catch steps (50, 51) and which produce the force flux between the splitting ram (35) and the ram control unit (36).

2. Device according to Claim 1, characterized in that the ram control units (36) are guided in T-shaped guide grooves (44) on the cutting-frame upper part (24) and are braced together with the latter by means of hydraulic tensioning devices (45).

3. Device according to Claim 1 or 2, characterized in that the splitting ram (35) is held in a holding plate (38) which delimits downwards, in the ram control unit (36), the lay-by space (40) of which the extent in the stroke direction (16) is adjustable.

4. Device according to Claim 1, characterized in that the control strip (41) facing the splitting ram (35) is guided in the stroke direction, whilst the other control strip (42) is adjustable transversely to it by means of a double-acting hydraulic piston (43).

5. Device according to one of the preceding claims, characterized in that a plurality of splitting rams (35) belong to a ram control unit (36).

6. Device according to one of the preceding claims, characterized in that the lower control strip (41) bears on the upper control strip (42) by spring force and is eased by hydraulic pressure before the upper control strip (42) is adjusted.

7. Device according to one of the preceding claims, characterized in that the control strips (41, 42) are electronically activated independently of one another according to a program.

8. Device according to one of the preceding claims, characterized in that the control strips (41, 42) are activated as a function of the position of control slides (20) in the perforating device (1).

9. Device according to one of the preceding claims, characterized in that an eccentric shaft of the wide-gauge perforating press drives the splitting plunger (34) via rocker levers and connecting rods.

10. Device according to Claim 1 or 2, characterized in that the ram control units (36) can be advanced vertically by specific amounts.

11. Device according to one of the preceding claims, characterized in that the cutting-frame upper part (24) is guided relative to the cutting-frame lower part (23) by means of a cutting-frame guide (25).

## Revendications

1. Dispositif de coupe et d'encochage pour des tôles perforées (39), notamment dans une presse large à perforer dans laquelle un dispositif de perforation (1) est prévu dans un corps de presse (5) et où un dispositif d'avance (2) fait passer la tôle (39) progressivement par le dispositif de perforation (1) et par le dispositif de coupe et d'encochage (3) disposé avant ou après celui-ci,
dans lequel le dispositif de coupe et d'encochage (3) présente une partie inférieure du bâti de coupe (23), suffisamment large par rapport à la largeur des tôles, avec une partie outil inférieure (33) et un coulisseau à fente (34) qui, lors d'une course, actionne un poinçon à fente (35) accouplé à la partie outil inférieure (33), **caractérisé en ce qu'**une partie supérieure du bâti de coupe (24) est reliée au coulisseau à fente (34), dans laquelle on a monté une ou plusieurs unités de commande de poinçonnage (36), mobiles longitudinalement sur la largeur des tôles et pouvant être bloquées, qui maintiennent et commandent le poinçon à fente (35), et dans lequel une chambre d'échappement (40) affectée à un des ponçons à fente (35) est limitée vers le haut par deux barres de commande superposées (41, 42), mobiles l'une par rapport à l'autre et pouvant occuper différentes positions de crantage avec différentes encoches, et génère le flux de force entre le poinçon à fente (35) et l'unité de commande de poinçonnage (36).

2. Dispositif selon la revendication 1, **caractérisé en ce que** les unités de commande de poinçonnage (36) sont montées dans des rainures de guidage en T (44) dans la partie supérieure du bâti de coupe (24) et sont maintenues au moyen de dispositifs de serrage hydrauliques (45).

3. Dispositif selon la revendication 1 ou 2, **caractérisé en ce que** le poinçon à fente (35) est maintenu dans une platine (38) limitant vers le bas la chambre d'échappement (40) dans l'unité de commande de poinçonnage (36), l'extension de la chambre dans le sens de la course (16) étant réglable.

4. Dispositif selon la revendication 1, **caractérisé en ce que** la barre de commande (41) du côté du poinçon à fente (35) est montée dans la direction de la course, tandis que l'autre barre de commande (42) peut être réglée obliquement au moyen d'un piston hydraulique (43) à double effet.

5. Dispositif selon l'une des revendications précédentes, **caractérisé en ce que** plusieurs poinçons à fente (35) sont rassemblés dans une unité de commande de poinçonnage (36).

6. Dispositif selon l'une des revendications précédentes, **caractérisé en ce que** la barre de commande inférieure (41) est en contact avec la barre supérieure (42) sous l'effet de la force élastique et est soulevée au moyen d'une pression hydraulique avant que la barre de commande supérieure (42) soit réglée.

7. Dispositif selon l'une des revendications précédentes, **caractérisé en ce que** les barres de commande (41, 42) sont commandées électroniquement indépendamment l'une de l'autre selon un programme.

8. Dispositif selon l'une des revendications précédentes, **caractérisé en ce que** les unités de commande (41, 42) sont commandées en fonction de la position des coulisses de commande (20) dans le dispositif de perforation (1).

9. Dispositif selon l'une des revendications précédentes, **caractérisé en ce qu**'un arbre d'excentrique de la presse à perforer large entraîne le coulisseau à fente (34) par l'intermédiaire de leviers oscillants et de bielles.

10. Dispositif selon la revendication 1 ou 2, **caractérisé en ce que** les unités de commande de poinçonnage (36) peuvent être avancées verticalement selon des valeurs définies.

11. Dispositif selon l'un des revendications précédentes, **caractérisé en ce que** la partie supérieure du bâti de coupe (24) est montée face à la partie inférieure du bâti de coupe (23) au moyen d'une glissière du bâti de coupe (25).
